# EUROPÄISCHE PATENTSCHRIFT

(11) **EP 1 840 006 B1**
(45) Veröffentlichungstag und Bekanntmachung des Hinweises auf die Patenterteilung: **16.09.2009**
(21) Anmeldenummer: 07005521.5
(22) Anmeldetag: 17.03.2007
(51) Int. Cl.: B62D 25/20, B60N 2/005

(54) **Fahrzeugkarosserie mit Querträgerstruktur für einen Sitzbereich des Fahrzeugs**
Vehicle body with cross member structure for the seating area in the vehicle
Carosserie de véhicule automobile avec une structure de traverse pour une zone d'assise du véhicule

(30) Priorität: 31.03.2006 DE 102006014983
(43) Veröffentlichungstag der Anmeldung: 03.10.2007
(73) Patentinhaber: Dr. Ing. h.c. F. Porsche Aktiengesellschaft, 70435 Stuttgart (DE)
(72) Erfinder: Schiebel, Dieter, 70825 Korntal-Münchingen (DE); Baumann, Peter, 75249 Kieselbronn (DE); Lippold, Andrea, 70499 Stuttgart (DE); Soellner, Michael, 71120 Grafenau-Döffingen (DE)

(56) Entgegenhaltungen:
- FR-A1- 2 698 600
- JP-A- 3 032 989
- JP-A- 5 058 347
- JP-A- 6 211 167
- JP-A- 8 175 425
- JP-A- 2000 159 148
- JP-A- 2000 168 627
- JP-A- 2000 238 541
- JP-A- 2000 280 931
- JP-A- 2000 280 937
- JP-A- 2001 347 966
- JP-A- 2002 249 070
- JP-A- 2003 002 248
- US-B1- 6 391 470

## Beschreibung

Die vorliegende Erfindung bezieht sich auf eine Fahrzeugkarosserie mit einer Querträgerstruktur für einen Sitzbereich eines Fahrzeugs.

Obwohl auf beliebige Fahrzeuge und Sitzbereiche anwendbar, werden die vorliegende Erfindung sowie die ihr zugrunde liegende Problematik in Bezug auf einen Bereich der hinteren Sitzreihe eines Personenkraftfahrzeugs näher erläutert.

Querträgerstrukturen sind im modernen Fahrzeugbau hinlänglich bekannt und umfassen im Wesentlichen Anordnungen von Längsträgern und Querträgern, die einerseits die erforderliche Steifigkeit und Festigkeit der Fahrzeugkarosserie sicherstellen und andererseits bei einem Fahrzeugaufprall durch Deformationen der einzelnen Träger Aufprallenergien aufnehmen. Üblicherweise werden in den Frontbereichen als auch in den Heckbereichen spezielle Querträger vorgesehen, welche lediglich die Funktion einer vorbestimmten Karosseriesteifigkeit und Seitenkollisionssicherheit besitzen.

Bei der Erhöhung der Seitenkollisionssicherheit ist eine große Schwierigkeit im Gegensatz zu Frontalkollisionen darin zu sehen, dass eine vergleichbar geringe Materialmenge zwischen dem auftreffenden Gegenstand und dem Fahrzeuginsassen vorhanden und der dazwischenliegende verfügbare Deformationsweg gering ist. Statistiken von Straßenverkehrsunfällen zeigen, dass die Verletzungen von Insassen im Falle von Seitenkollisionen sowohl hinsichtlich ihrer Häufigkeit als auch der Schwere sogar bei relativ geringen Geschwindigkeiten zunehmen.

Es wurden bereits verschiedene Lösungen zur Verbesserung des Seitenkollisionsschutzes von Fahrgastzellen vorgeschlagen. Die meisten konzentrieren sich dabei auf die Verstärkung der Türen durch Einbau von Verstärkungselementen zwischen der äußeren und der inneren Seitenwand der Tür in Form von Rohrkonstruktionen, profilierten Platten oder Ähnlichem. Dadurch soll eine starre Konstruktion erzielt werden, die unter einer bestimmten Belastung lediglich einer gewissen maximalen Verformung unterliegt.

An diesen Ansätzen hat sich jedoch die Tatsache als nachteilig herausgestellt, dass zusätzliche Verstärkungsbauteile vorgesehen werden müssen, welche in einem zusätzlichen Herstellungsaufwand, zusätzlichen Herstellungskosten sowie in einer Gewichtserhöhung resultieren und schwer in die bestehende Trägerstruktur integrierbar sind.

Den bekannten Türverstärkungskonstruktionen ist ferner nachteilig gemeinsam, dass bei Seitenkollisionen eine nur geringe Masse des gesamten Fahrzeuges, das durch ein anderes Fahrzeug berührt wird, zur Verfügung steht, um im Anfangsstadium die Aufprallenergie aufzunehmen. Der geringe Verformungswiderstand der Tür oder des Seitenteils des Fahrzeugs, das kollidiert wurde, bewirkt zunächst nur eine geringe Geschwindigkeitsreduzierung des auffahrenden Fahrzeugs. Der Insasse wird daher durch die eine hohe Geschwindigkeit aufweisende Türseite berührt und einer kräftigen Beschleunigung relativ zum eigenen Fahrzeug während der weiteren Deformation unterworfen.

Aus der Druckschrift JP-05-058347 A ist eine Fahrzeugkarosserie nach dem Oberbegriff des Anspruchs 1 bekannt.

Aus der Druckschrift DE 42 05 891 C2 ist eine Sitzträgerkonstruktion bekannt, welche Sitzlängsträger und Sitzquerträger umfasst. Die Sitzquerträger sind über einen Tunnelquerträger miteinander verbunden und bilden einen in Fahrzeugquerrichtung wirkenden Verbund. Die Sitzquerträger weisen in den Endbereichen Sitzlängsträger auf, welche von den zugeordneten Türschwellern beabstandet sind.

Eine derartige Sitzträgerkonstruktion ist allerdings vornehmlich dazu geeignet, die Krafteinleitung in die Längsträger zu verbessern.

Die Druckschrift EP 0 066 963 B1 beschreibt eine Karosseriebodenstruktur für ein Kraftfahrzeug, bei welcher Querversteifungen zwischen einem Mitteltunnel und einem Seitenschwellerabschnitt vorgesehen sind, wobei diese Querversteifungen als einstückige Rohre ausgebildet sind, die direkt in Anlage mit einem zugeordneten Seitenschwellerabschnitt zu bringen sind.

Hierbei hat sich jedoch die Tatsache als nachteilig herausgestellt, dass aufgrund der einstückigen Ausgestaltung auftretende Toleranzen nicht oder lediglich schwer ausgeglichen werden können und die einzelnen Bauteile aufwändig und kostenintensiv mit einer sehr hohen Passgenauigkeit hergestellt werden müssen.

Somit liegt der vorliegenden Erfindung die Aufgabe zugrunde, eine Querträgerstruktur für einen Sitzbereich eines Fahrzeugs zu schaffen, welche die obengenannten Nachteile beseitigt und insbesondere gegenüber vorbekannten Strukturen einen wirksameren Schutz gegen Seitenkollisionen bei einfacherer Integration in die bestehende Trägerstruktur gewährleistet.

### VORTEILE DER ERFINDUNG

Diese Aufgabe wird erfindungsgemäß durch eine Fahrzeugkarosserie mit den Merkmalen des Patentanspruchs 1 gelöst.

Die vorliegende Erfindung weist gegenüber den oben genannten Ansätzen den Vorteil auf, dass aufgrund der durchgehenden Verbindung zwischen den beiden Karosserieseitenteilen eine in Fahrzeugquerrichtung sehr steife Querträgerstruktur geschaffen wird, welche einerseits die Torsionssteifigkeit verbessert und andererseits zusätzlich bei einem Seitenaufprall die entstehende Deformationsenergie aufnimmt und die notwendigen Reaktionskräfte aufzubauen imstande ist. Zusätzlich zu dieser Funktion dient die Trägerstruktur einer Aufnahme einer zugeordneten Sitzmulde, so dass die Trägerstruktur vorteilhaft eine Doppelfunktion besitzt und in die bestehende Struktur auf einfache Weise integrierbar ist, da auf bereits existierende Komponenten zurückgegriffen wird.

Ferner ist die erfindungsgemäße Querträgerstruktur in etwa auf Höhe der Stoßstange des kollidierenden Fahrzeuges vorgesehen, so dass diese an einem Eindringen in das Fahrzeug durch die Querträgerstruktur aufgrund der Aufnahme der Aufprallenergie gehindert wird.

Des Weiteren werden aufgrund der mehrteiligen Ausgestaltung der Struktur die Herstellungskosten und die Herstellungsverfahren der einzelnen Trägerteile optimiert, da für jedes einzelne Trägerteil ein geeignetes Herstellungsverfahren ausgewählt werden kann. Eine Verbindung der separat hergestellten Trägerteile erfolgt vorteilhaft erst nach deren Herstellung.

Da die Kopplungselemente als Montageteile ausgebildet sind, kann ein Toleranzausgleich bezüglich zugeordneter, die Deformationsenergien übertragender Deformationsteile auf einfache und kostengünstige Weise bewerkstelligt werden.

In den Unteransprüchen finden sich vorteilhafte Ausgestaltungen und Verbesserungen der im Patentanspruch 1 angegebenen Fahrzeugkarosserie. Gemäß einer bevorzugten Weiterbildung weisen die Kopplungselemente jeweils ein U-förmiges Profil für eine Aufnahme der karosserieseitigen Enden der Querverstärkungselemente auf. Das U-förmige Profil wird mittels eines Abschlusselementes verschlossen, wobei sich die Kopplungselemente über die Abschlusselemente an den zugeordneten Karosserieseitenteilen abstützen und Aufprallenergie auf die aufgenommenen Querverstärkungselemente übertragen.

Gemäß einer weiteren bevorzugten Weiterbildung weisen die Kopplungselemente jeweils ein Schließteil mit abgewinkelten Abschnitten auf, über welche die Schließteile auf den zugeordneten Karosserieseitenteilen befestigbar sind. Die Schließteile besitzen jeweils einen Befestigungsabschnitt für eine Anbringung des unteren Anlenkpunktes eines Sicherheitsgurtes. Dadurch weist das Kopplungselement mehrere Funktionen auf - zum einen die Übertragung von Aufprallenergie von dem zugeordneten Karosserieseitenteil auf die Querverstärkungselemente und zum anderen das Tragen von Schließteilen für eine Befestigung von Kraftfahrzeugkomponenten, wie beispielsweise eines Sicherheitsgurtes.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine perspektivische Ansicht einer Fahrzeugkarosserie mit einer Querträgerstruktur gemäß einem bevorzugten Ausführungsbeispiel der vorliegenden Erfindung;
- Figur 2: eine perspektivische Ansicht eines mittleren Sitzquerträgers gemäß einem bevorzugten Ausführungsbeispiel der vorliegenden Erfindung;
- Figur 3: eine Explosionsansicht einer Anordnung bestehend aus einem seitlichen Querverstärkungselement sowie einem Kopplungselement gemäß einem bevorzugten Ausführungsbeispiel der vorliegenden Erfindung;
- Figur 4: eine perspektivische Ansicht der Anordnung aus Fig. 3 bestehend aus dem seitlichen Querverstärkungselement sowie dem Kopplungselement im zusammengebauten Zustand;
- Figur 5: eine Draufsicht auf die Anordnung aus Figur 4;
- Figur 6: eine Vorderansicht der Anordnung aus den Figuren 4 und 5;
- Figur 7: eine perspektivische Ansicht eines inneren Karosserieseitenteils gemäß einem bevorzugten Ausführungsbeispiel der vorliegenden Erfindung; und
- Figur 8: eine perspektivische Ansicht einer mit dem inneren Karosserieseitenteil gekoppelten Querträgerstruktur gemäß einem bevorzugten Ausführungsbeispiel der vorliegenden Erfindung.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

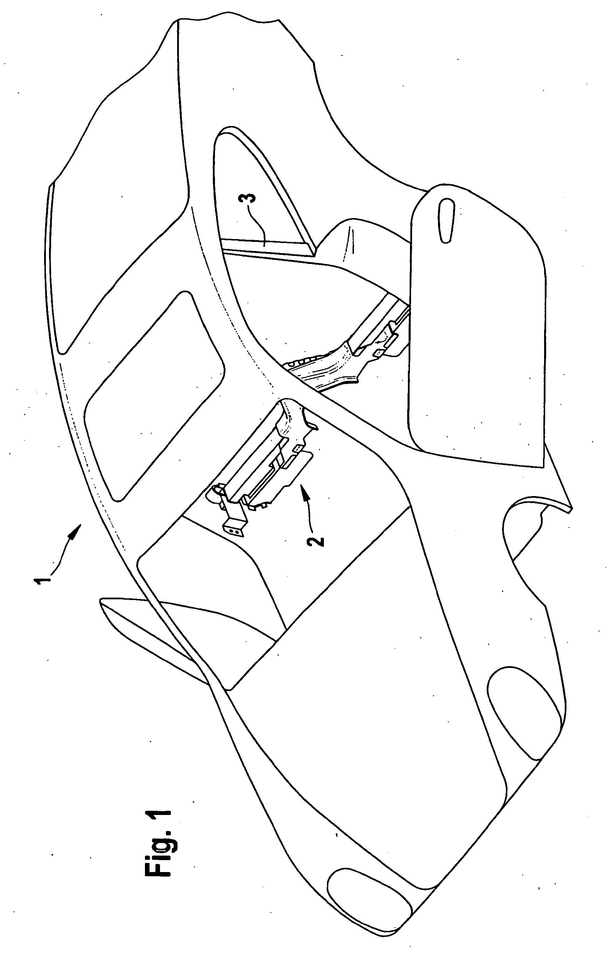

Figur 1 illustriert eine perspektivische Ansicht einer Fahrzeugkarosserie 1, welche eine Querträgerstruktur 2 gemäß einem bevorzugten Ausführungsbeispiel der vorliegenden Erfindung umfasst. Die Querträgerstruktur 2 ist in etwa auf Höhe der B-Säule 3 in Fahrzeugquerrichtung vorgesehen und dient einer Aufnahme einer zugeordneten, nicht dargestellten Sitzmulde der hinteren Sitzreihe des Fahrzeugs.

Die Querträgerstruktur 2 weist einen mittleren Sitzquerträger, welcher sich über seitliche Sitzquerträger an zugeordneten Türschwellerverstärkungen abstützt, und seitliche Querverstärkungselemente für eine zusätzliche Versteifung der Querträgerstruktur auf, welche im Folgenden näher beschrieben werden.

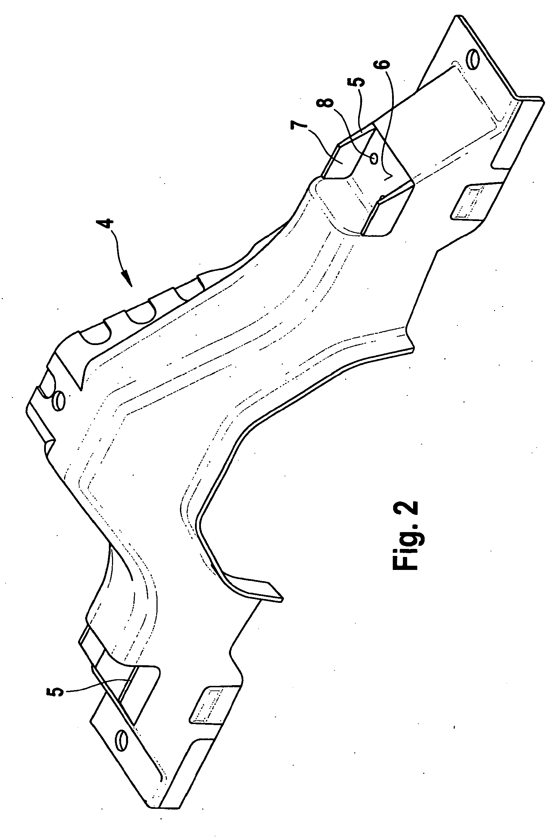

Figur 2 illustriert eine perspektivische Ansicht eines mittleren Sitzquerträgers 4 gemäß einem bevorzugten Ausführungsbeispiel der vorliegenden Erfindung. Gemäß diesem Ausführungsbeispiel ist der mittlere Sitzquerträger 4 als hutförmiger Querträger mit einer bezüglich der Längsachse des Fahrzeugs symmetrischen Ausgestaltung ausgebildet. Der mittlere Sitzquerträger 4 weist vorzugsweise ein U-förmiges Querschnittsprofil auf, welches in etwa in Richtung des Fahrzeugbodens offen ist. Beispielsweise ist der mittlere Sitzquerträger 4 als Gussteil aus einer geeigneten Aluminiumlegierung oder dergleichen hergestellt, so dass ein Querträgerteil mit einer hohen Querversteifung und einem geringen Gewicht gewährleistet wird. Für eine weitere Erhöhung der Steifigkeit kann der mittlere Sitzquerträger 4 mit einem vorzugsweise komplementär dazu ausgebildeten Schließteil zum Bilden eines geschlossenen Kastenprofils verbunden werden.

Wie in Figur 2 ferner illustriert ist, weist der mittlere Sitzquerträger 4 seitliche Aufnahmebereiche 5 für eine Aufnahme der weiter unten beschriebenen seitlichen Querverstärkungselemente auf. Beispielsweise umfasst jeder Aufnahmebereich 5 eine Auflagefläche 6, Anlagenkanten 7 sowie Befestigungslöcher 8 für eine Befestigung der jeweils zugeordneten seitlichen Querverstärkungselemente.

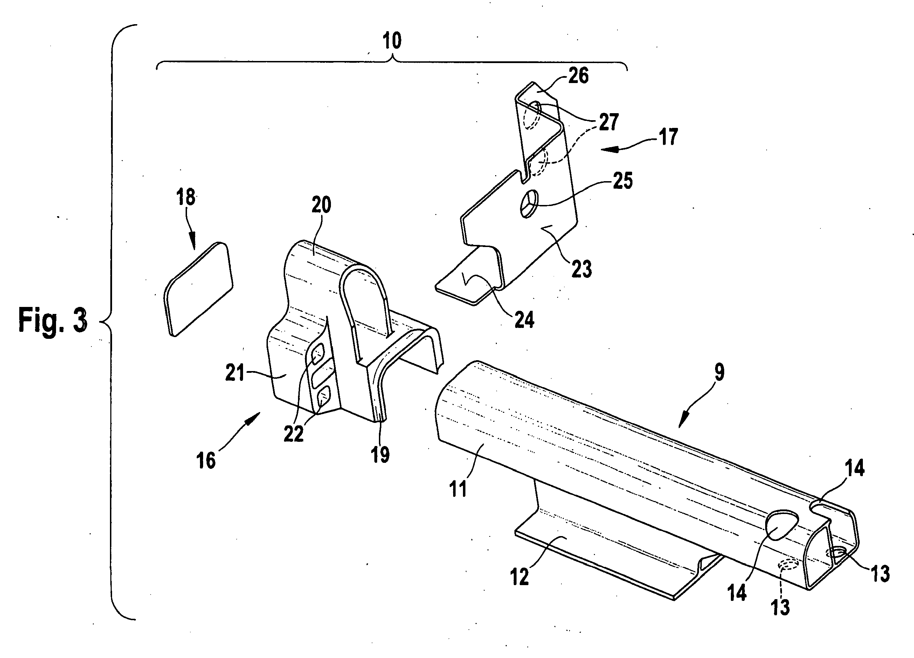

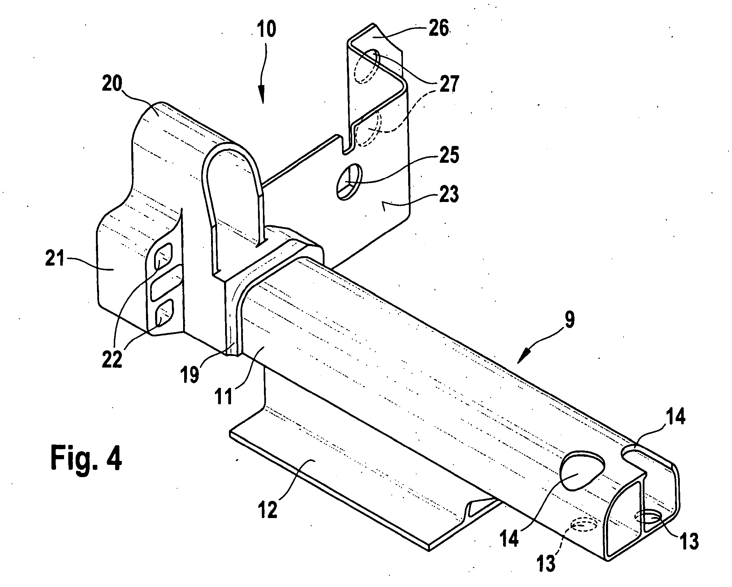

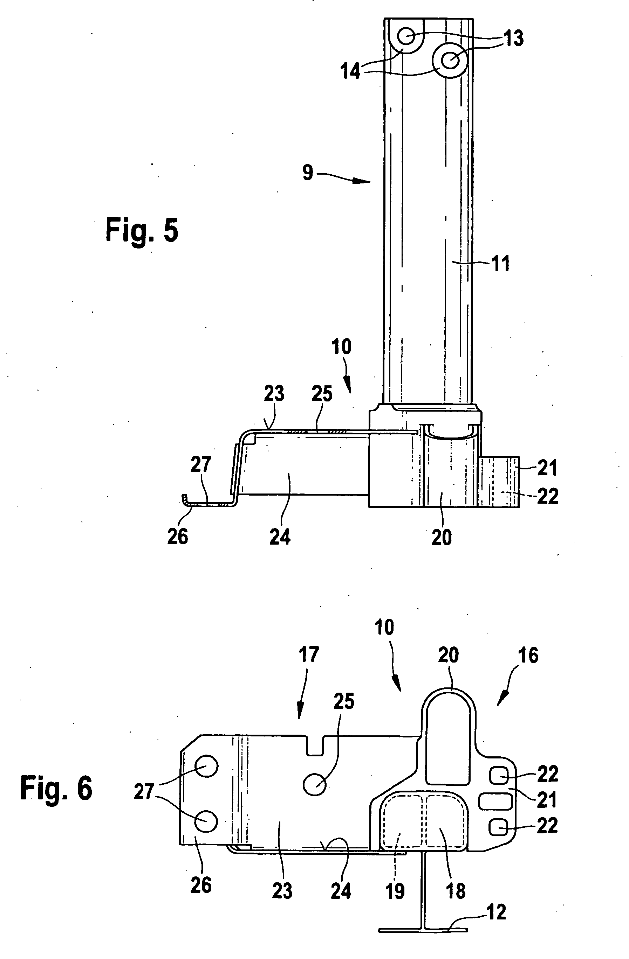

Im Folgenden wird unter Bezugnahme auf die Figuren 3 bis 6 ein Ausführungsbeispiel eines der beiden Querverstärkungselemente 9 mit zugeordnetem Kopplungselement 10 näher erläutert, wobei es sich bei der in den Figuren dargestellten Anordnung rein exemplarisch um die in Fahrzeugvorderseite gesehen linke Versteifungsanordnung handelt. Die Anordnung bestehend aus einem mittleren Sitzquerträger 4 und zwei seitlichen Querverstärkungselementen 9 mit zugeordneten Kopplungselementen 10 ist bezüglich der Längsachse vorzugsweise symmetrisch vorgesehen.

Wie in den Figuren 3 bis 6 ersichtlich ist, sind die Querverstärkungselemente 9 beispielsweise als quer verlaufende Hohlrohre, welche auch als sogenannte Sincap-Rohre bezeichnet werden, ausgebildet und in etwa parallel zum Fahrzeugboden ausgerichtet. Die Querverstärkungselemente 9 sind über die zugeordneten Aufnahmebereiche 5 des mittleren Sitzquerträgers 4 mit demselben verbunden und erstrecken sich jeweils in Fahrzeugquerrichtung von den beiden Aufnahmebereichen 5 des mittleren Sitzquerträgers 4 in Richtung eines jeweils zugeordneten inneren Karosserieseitenteils. Beispielsweise sind die seitlichen Querverstärkungselemente 9 als eine oder mehrere Hohlkammern, vorzugsweise zwei Hohlkammern, aufweisende Strangpressprofile aus einer geeigneten Aluminiumlegierung oder dergleichen geformt.

Die Querverstärkungselemente 9 bestehen gemäß dem vorliegenden Ausführungsbeispiel aus einem Grundkörper 11 mit einem Zwei-Kammerprofil, wie oben bereits erläutert. An der Unterseite des Grundkörpers 11 ist beispielsweise ein Abstützfuß 12 in Form eines auf den Kopf gestellten T's, vorzugsweise ebenfalls im Strangpressverfahren, angeformt. Solch einteilig ausgebildete Querverstärkungselemente 9 weisen eine besonders hohe Stabilität bei geringem Gewicht auf, weil keine Sollbruchstellen, wie beispielsweise mangelhafte Schweißnähte, vorhanden sind. Der Abstützfuß 12 dient einer Abstützung des Querverstärkungselementes 9 auf einem zugeordneten seitlichen Querträger.

Des Weiteren umfassen die Querverstärkungselemente 9 jeweils Befestigungslöcher 13, welche bei einer Aufnahme der Querverstärkungselemente 9 in den zugeordneten Aufnahmebereichen 5 des mittleren Sitzquerträgers 4 mit den Befestigungslöchern 8 der jeweiligen Aufnahmebereiche 5 fluchten. Oberhalb jedes Befestigungslochs 13 ist beispielsweise eine Werkzeugausnehmung 14 in den Querverstärkungselementen 9 vorgesehen, um beispielsweise Befestigungsschrauben in die Befestigungslöcher 13 und 8 für eine Verschraubung der Querverstärkungselemente 9 an dem mittleren Sitzquerträger 4 einzusetzen und zu verschrauben.

Ferner ist jedem Querverstärkungselement 9 ein Kopplungselement 10 zugeordnet, welches aus einem Formteil 16, einem Schließteil 17 und einem Abschlusselement 18 besteht. Das Formteil 16 ist als Strangpressprofil vorzugsweise aus einer geeigneten Aluminiumlegierung hergestellt und weist einen unteren, offenen Profilabschnitt 19 auf, der ein in etwa U-förmiges Querschnittsprofil mit einem nach unten geöffneten Öffnungsbereich für eine Aufnahme des karosserieseitigen Endes des zugeordneten Querverstärkungselements 9 besitzt. Wie insbesondere in den Figuren 3 bis 6 ersichtlich ist, kann das Formteil 16 auf das korrespondierende karosserieseitige Ende des zugeordneten Querverstärkungselementes 9 aufgesteckt bzw. passgenau aufgeschoben und mit diesem verschweißt werden.

Das Formteil 16 besitzt ferner einen oberhalb des unteren Profilabschnitts 19 vorgesehenen oberen Profilabschnitt 20 für eine zusätzliche Versteifung des Formteils 16 sowie eine zusätzliche Energieaufnahme. Des Weiteren ist in einem Seitenbereich des Formteils 16 ein Vorsprung 21 angeformt, welcher zwei übereinander angeordnete Durchgangslöcher 22 umfasst.

Das Schließteil 17 ist vorzugsweise als Schließblech aus einer geeigneten Aluminiumlegierung hergestellt und mit der dem Vorsprung 21 gegenüberliegenden Seitenfläche des Formteils 16 mittels vorzugsweise geeigneten Schweißverbindungen fest verbunden. Das Schließteil 17 ist vorzugsweise als Winkelteil mit einer vertikalen Fläche 23 und einer dazu in etwa senkrecht angeformten horizontalen Fläche 24 ausgebildet. Die vertikale Fläche 23 weist eine Befestigungsstelle, beispielsweise ein Befestigungsloch 25, auf, welches einer Befestigung des unteren Anlenkpunktes eines Sicherheitsgurtes dient.

Ferner umfasst das Schließteil 17 einen in Richtung des zugeordneten Karosserieseitenteils weisenden, abgekröpften Befestigungsabschnitt 26 mit Befestigungslöchern 27. Das Schließteil 17 und somit das damit fest verbundene Formteil 16 wird über den Befestigungsabschnitt 26 bzw. die Befestigungslöcher 27 an einem zugeordneten Karosserieseitenteil, vorzugsweise im Bereich der B-Säule, mittels vorzugsweise einer Schraubverbindung fest montiert. Dadurch wird einerseits die Befestigungsstelle 25 für die Anbringung des Anlenkpunktes des Sicherheitsgurtes festgelegt und andererseits die zusätzliche Querversteifung bestehend aus dem Querversteifungselement 9 und dem Kopplungselement 10 zur Aufnahme von Aufprallenergie bezüglich des zugeordneten Karosserieseitenteils exakt positioniert.

Jedes Kopplungselement 10 weist zudem ein Abschlusselement 18, wie oben bereits kurz erläutert, auf, welches als Schließblech aus einer geeigneten Aluminiumlegierung hergestellt ist. Das Abschlusselement 18 besitzt eine zu der karosserieseitigen Öffnung des unteren Profilabschnitts 19 des Formteils 16 komplementär ausgebildete Form derart, dass durch Verschweißen des Abschlusselementes 18 an dem Öffnungsbereich des unteren Profilabschnitts 19 des Formteils 16 eine geschlossene Abschlussfläche entsteht. Das Abschlusselement 18 dient einer Anlage des Kopplungselementes 10 an der inneren Fläche des zugeordneten inneren Karosserieseitenteils und einer Übertragung von Deformationsenergie über das zugeordneten Karosserieseitenteil auf das zugeordnete, daran anliegende Querverstärkungselement 9.

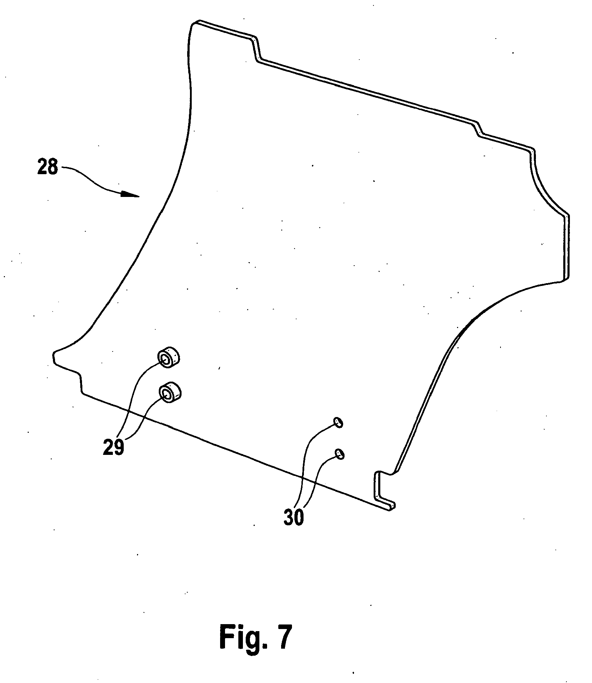

Figur 7 illustriert eine perspektivische Ansicht eines inneren Karosserieseitenteils 28, wobei die dargestellte Oberfläche des Karosserieseitenteils 28 die der Fahrzeuginnenseite zugewandte äußere Fläche darstellt. Das oben evaluierte Kopplungselement 10 befindet sich an der nicht dargestellten Rückseite des Karosserieseitenteils 28 in Anlage mit dem unteren Bereich desselben. Bei einer geeigneten Positionierung des Kopplungselementes 10 an der fahrzeuginnenseitigen Oberfläche des inneren Karosserieseitenteils 28 fluchten die Befestigungslöcher 27 des Kopplungselementes 10 mit zugeordneten Befestigungslöchern 29 des inneren Karosserieseitenteils 28. Zusätzlich fluchten die Durchgangslöcher 22 des Formteils 16 mit Durchgangslöchern 30 des inneren Karosserieseitenteils 28.

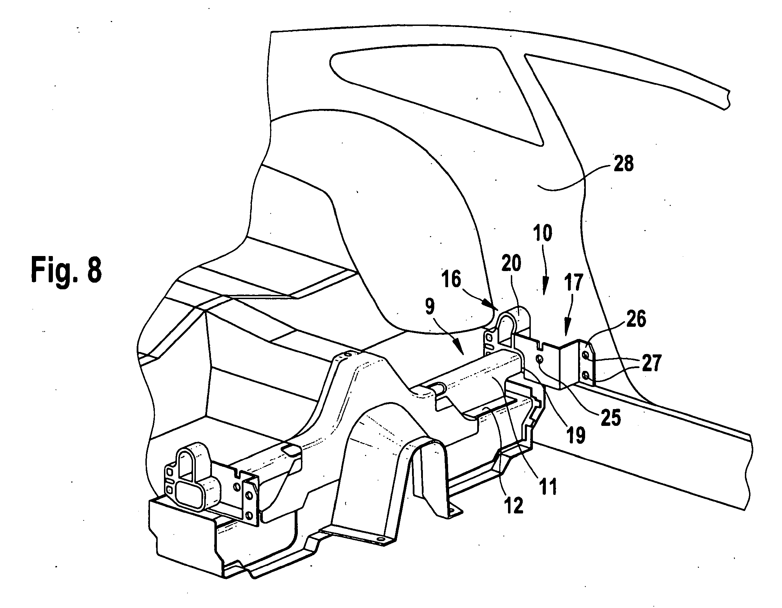

Im montierten Zustand liegt somit der Befestigungsabschnitt 26 des Schließteils 17 an der die Befestigungslöcher 29 aufweisenden Fläche des inneren Karosserieseitenteils 28 von der Fahrzeuginnenseite her an. Zudem befindet sich die karosserieseitige Fläche des Formteils 16 mit dem die Durchgangslöcher 30 aufweisenden Bereich des inneren Karosserieteils 28 in Anlage, wie in Figur 8 in perspektivischer Ansicht bezüglich der linken Fahrzeugseite dargestellt ist.

Es wird demnach eine Querträgerstruktur mit einer verbesserten Querversteifung, einer optimierten Krafteinleitung und einem einfachen Toleranzausgleich in verschiedenen Fahrzeugebenen geschaffen. Da die einzelnen Bauteile separat herstellbar und lediglich nach der Herstellung miteinander verbindbar sind, können die einzelnen Bauteile mit jeweils optimierten Herstellungsverfahren vor einem Zusammenfügen derselben hergestellt werden.

Obwohl die vorliegende Erfindung anhand bevorzugter Ausführungsbeispiele vorstehend beschrieben wurde, ist sie darauf nicht beschränkt, sondern auf vielfältige Weise modifizierbar.

## Patentansprüche

1. Fahrzeugkarosserie (1) mit Karosserieseitenteilen (28), Türschwellerverstärkungen und einer Querträgerstruktur (2) für einen Sitzbereich eines Fahrzeugs, die einen mittleren Sitzquerträger (4) und seitliche Sitzquerträger aufweist, über die sich der mittlere Sitzquerträger (4) an den zugeordneten Türschwellerverstärkungen abstützt, **dadurch gekennzeichnet, dass** der mittlere Sitzquerträger (4) seitliche Aufnahmebereiche (5) für mindestens zwei in Fahrzeugquerrichtung verlaufende, seitliche Querverstärkungselemente (9) aufweist, welche jeweils an einem dem mittleren Sitzquerträger (4) zugewandten Ende mit einem der seitlichen Aufnahmebereiche (5) des mittleren Sitzquerträgers (4) fest verbunden sind, dass mindestens zwei Kopplungselemente (10) vorgesehen sind, welche jeweils einem seitlichen Querverstärkungselement (9) zugeordnet sind und mit einem dem zugeordneten Karosserieseitenteil (28) zugewandten Ende des zugeordneten seitlichen Querverstärkungselementes (9) für eine Abstützung desselben an dem zugeordneten Karosserieseitenteil (28) gekoppelt sind, und dass die Querverstärkungselemente (9) jeweils einen Abstützfuß (12) für eine Abstützung an dem darunter liegenden, zugeordneten seitlichen Sitzquerträger aufweisen.

2. Fahrzeugkarosserie nach Anspruch 1, **dadurch gekennzeichnet, dass** der mittlere Sitzquerträger (4), die seitlichen Querverstärkungselemente (9) und die Kopplungselemente (10) in symmetrischer Anordnung zur Fahrzeuglängsachse vorgesehen sind.

3. Fahrzeugkarosserie nach Anspruch 1 oder 2, **dadurch gekennzeichnet, dass** der mittlere Sitzquerträger (4) als hutförmiger Querträger mit einem U-förmigen, in etwa in Richtung des Fahrzeugbodens offenen Querschnittsprofil ausgebildet und mit einem Schließteil gekoppelt ist.

4. Fahrzeugkarosserie nach wenigstens einem der vorhergehenden Ansprüche, **dadurch gekennzeichnet, dass** die seitlichen Querverstärkungselemente (9) jeweils als rohrförmiges Strangpressprofil, beispielsweise aus einer Leichtmetalllegierung wie insbesondere einer Aluminiumlegierung, ausgebildet sind.

5. Fahrzeugkarosserie nach wenigstens einem der vorhergehenden Ansprüche, **dadurch gekennzeichnet, dass** die seitlichen Querverstärkungselemente (9) jeweils als rohrförmiges Zwei-Kammerprofil ausgebildet sind.

6. Fahrzeugkarosserie nach wenigstens einem der vorhergehenden Ansprüche, **dadurch gekennzeichnet, dass** die Kopplungselemente (10) jeweils als Strangpressprofil, beispielsweise aus einer Leichtmetalllegierung wie insbesondere einer Aluminiumlegierung, ausgebildet sind.

7. Fahrzeugkarosserie nach wenigstens einem der vorhergehenden Ansprüche, **dadurch gekennzeichnet, dass** die Kopplungselemente (10) jeweils ein U-förmiges, unteres Querschnittsprofil (19) für eine Aufnahme des karosserieseitigen Endes des jeweils zugeordneten seitlichen Querverstärkungselementes (9) und ein oberhalb davon angeordnetes oberes Hohlprofil (20) aufweisen.

8. Fahrzeugkarosserie nach wenigstens einem der vorhergehenden Ansprüche, **dadurch gekennzeichnet, dass** die Kopplungselemente (10) jeweils in einem seitlichen Bereich einen Vorsprung (21) aufweisen, in welchem Durchgangslöcher (22) vorgesehen sind.

9. Fahrzeugkarosserie nach wenigstens einem der vorhergehenden Ansprüche, **dadurch gekennzeichnet, dass** die Kopplungselemente (10) jeweils ein Schließteil (17) mit einem abgewinkelten Befestigungsabschnitt (26) aufweisen, über welche die Schließteile (17) an den zugeordneten Karosserieseitenteilen (28) befestigt sind.

10. Fahrzeugkarosserie nach Anspruch 9, **dadurch gekennzeichnet, dass** die Schließteile (17) jeweils einen Anbindungsabschnitt (23) für eine Anbringung des unteren Anlenkpunktes eines zugeordneten Sicherheitsgurtes aufweisen.

11. Fahrzeugkarosserie nach wenigstens einem der Ansprüche 7 bis 10, **dadurch gekennzeichnet, dass** die Kopplungselemente (10) jeweils ein Abschlusselement (18) für einen seitlichen Abschluss des dem zugeordneten Karosserieseitenteil (28) zugewandten . Öffnungsbereiches des unteren Profils (19) aufweisen.

12. Fahrzeugkarosserie nach Anspruch 11, **dadurch gekennzeichnet, dass** die Schließteile (17) sowie die Abschlusselemente (18) jeweils als Blechteile, beispielsweise aus einer Leichtmetalllegierung wie insbesondere einer Aluminiumlegierung, ausgebildet sind.

## Claims

1. Vehicle body (1) having body side parts (28), door sill reinforcements and a cross member structure (2) for a seat area of a vehicle, which cross member structure (2) has a central seat cross member (4) and lateral seat cross members by means of which the central seat cross member (4) is supported on the associated door sill reinforcements, **characterized in that** the central seat cross member (4) has lateral holding areas (5) for at least two lateral transverse reinforcement elements (9) which run in the vehicle transverse direction and which are in each case fixedly connected, at an end which faces towards the central seat cross member (4), to one of the lateral holding areas (5) of the central seat cross member (4), **in that** at least two coupling elements (10) are provided which are assigned to in each case one lateral transverse reinforcement element (9) and which are coupled to an end, which faces towards the associated body side part (28), of the associated lateral transverse reinforcement element (9) so as to support the latter on the associated body side part (28), and **in that** the transverse reinforcement elements (9) have in each case a support foot (12) for support on the underlying associated lateral seat cross member.

2. Vehicle body according to Claim 1, **characterized in that** the central seat cross member (4), the lateral transverse reinforcement elements (9) and the coupling elements (10) are provided in a symmetrical arrangement with respect to the vehicle longitudinal axis.

3. Vehicle body according to Claim 1 or 2, **characterized in that** the central seat cross member (4) is designed as a hat-shaped cross member with a U-shaped cross-sectional profile open approximately in the direction of the vehicle floor, and is coupled to a closing part.

4. Vehicle body according to at least one of the preceding claims, **characterized in that** the lateral transverse reinforcement elements (9) are formed in each case as tubular extruded profiles, for example from a light metal alloy such as in particular an aluminium alloy.

5. Vehicle body according to at least one of the preceding claims, **characterized in that** the lateral transverse reinforcement elements (9) are formed in each case as tubular twin-chamber profiles.

6. Vehicle body according to at least one of the preceding claims, **characterized in that** the coupling elements (10) are formed in each case as extruded profiles, for example from a light metal alloy such as in particular an aluminium alloy.

7. Vehicle body according to at least one of the preceding claims, **characterized in that** the coupling elements (10) have in each case a U-shaped lower cross-sectional profile (19), for holding the body-side end of the respectively associated lateral transverse reinforcement element (9), and an upper hollow profile (20) which is arranged above said lower cross-sectional profile (19).

8. Vehicle body according to at least one of the preceding claims, **characterized in that** the coupling elements (10) have, in each case in a lateral area, a projection (21) in which through holes (22) are provided.

9. Vehicle body according to at least one of the preceding claims, **characterized in that** the coupling elements (10) have in each case a closing part (17) with an angled fastening section (26) by means of which the closing parts (17) are fastened to the associated body side parts (28).

10. Vehicle body according to Claim 9, **characterized in that** the closing parts (17) have in each case a connecting section (23) for a connection of the lower attachment point of an associated safety belt.

11. Vehicle body according to at least one of Claims 7 to 10, **characterized in that** the coupling elements (10) have in each case a closure element (18) for laterally closing off the opening area, which faces towards the associated body side part (28), of the lower profile (19).

12. Vehicle body according to Claim 11, **characterized in that** the closing parts (17) and the closure elements (18) are formed in each case as sheet-metal parts, for example from a light metal alloy such as in particular an aluminium alloy.

## Revendications

1. Carrosserie de véhicule automobile (1) avec des parties latérales de carrosserie (28), des renforts de seuils de porte et une structure de traverse (2) pour une zone d'assise d'un véhicule, qui présente une traverse de siège centrale (4) et une traverse de siège latérale, par laquelle la traverse de siège centrale (4) s'appuie sur les renforts de seuil de porte associés, **caractérisée en ce que** la traverse de siège centrale (4) présente des zones de réception latérales (5) pour au moins deux éléments de renforcement transversal latéraux (9) s'étendant dans la direction transversale du véhicule, qui sont fixement assemblés par une extrémité tournée vers la traverse de siège centrale (4) respectivement à une des zones de réception latérales (5) de la traverse de siège centrale (4), **en ce qu'**il est prévu au moins deux éléments de couplage (10) qui sont respectivement associés à un élément de renforcement transversal latéral (9) et qui sont couplés à une extrémité, tournée vers la partie latérale de carrosserie associée (28), de l'élément de renforcement transversal latéral associé (9) pour un appui de celui-ci sur la partie latérale de carrosserie associée (28), et **en ce que** les éléments de renforcement transversal (9) présentent chacun un pied d'appui (12) pour un appui sur la traverse de siège latérale associée sous-jacente.

2. Carrosserie de véhicule automobile selon la revendication 1, **caractérisée en ce que** la traverse de siège centrale (4), les éléments de renforcement transversal latéraux (9) et les éléments de couplage (10) sont prévus en une disposition symétrique par rapport à l'axe longitudinal du véhicule.

3. Carrosserie de véhicule automobile selon la revendication 1 ou 2, **caractérisée en ce que** la traverse de siège centrale (4) est constituée par une traverse en forme de chapeau avec un profil de section transversale en forme de U, ouvert sensiblement en direction du plancher du véhicule, et est couplée avec une pièce de fermeture.

4. Carrosserie de véhicule automobile selon l'une quelconque des revendications précédentes, **caractérisée en ce que** les éléments de renforcement transversal latéraux (9) sont chaque fois constitués par un profilé tubulaire extrudé, par exemple en un alliage de métal léger comme un alliage d'aluminium en particulier.

5. Carrosserie de véhicule automobile selon l'une quelconque des revendications précédentes, **caractérisée en ce que** les éléments de renforcement transversal latéraux (9) sont chaque fois constitués par un profilé tubulaire à deux chambres.

6. Carrosserie de véhicule automobile selon l'une quelconque des revendications précédentes, **caractérisée en ce que** les éléments de couplage (10) sont chaque fois constitués par un profilé extrudé, par exemple en un alliage de métal léger comme un alliage d'aluminium en particulier.

7. Carrosserie de véhicule automobile selon l'une quelconque des revendications précédentes, **caractérisée en ce que** les éléments de couplage (10) présentent chaque fois un profil inférieur de section transversale en forme de U (19) pour une réception de l'extrémité côté carrosserie de l'élément de renforcement transversal latéral respectivement associé (9) et un profil creux supérieur (20) situé au-dessus de celui-ci.

8. Carrosserie de véhicule automobile selon l'une quelconque des revendications précédentes, **caractérisée en ce que** les éléments de couplage (10) présentent dans une région latérale une saillie (21), dans laquelle il est prévu des trous de passage (22).

9. Carrosserie de véhicule automobile selon l'une quelconque des revendications précédentes, **caractérisée en ce que** les éléments de couplage (10) présentent chaque fois une pièce de fermeture (17) avec une partie de fixation coudée (26), par laquelle les pièces de fermeture (17) sont fixées aux parties latérales de carrosserie associées (28).

10. Carrosserie de véhicule automobile selon la revendication 9, **caractérisée en ce que** les pièces de fermeture (17) présentent chaque fois une partie d'attache (23) pour y installer le point d'articulation inférieur d'une ceinture de sécurité associée.

11. Carrosserie de véhicule automobile selon au moins une des revendications 7 à 10, **caractérisée en ce que** les éléments de couplage (10) présentent chaque fois un élément de fermeture (18) pour la fermeture latérale de la zone ouverte du profil inférieur (19) tournée vers la partie latérale de carrosserie associée (28).

12. Carrosserie de véhicule automobile selon la revendication 11, **caractérisée en ce que** les pièces de fermeture (17) ainsi que les éléments de fermeture (18) sont chaque fois des pièces de tôle, par exemple en un alliage de métal léger comme un alliage d'aluminium en particulier.
